# FASCICULE DE BREVET EUROPEEN

(11) **EP 1 638 785 B1**
(45) Date de publication et mention de la délivrance du brevet: **02.12.2009**
(21) Numéro de dépôt: 04739823.5
(22) Date de dépôt: 11.06.2004
(51) Int. Cl.: B60C 11/01, B60C 11/117

(54) **ELEMENT PROTECTEUR D'UNE BANDE DE ROULEMENT**
SCHUTZRIPPE FÜR EINE REIFENLAUFFLÄCHE
PROTECTIVE ELEMENT FOR A TREAD

(30) Priorité: 16.06.2003 FR 0307232
(43) Date de publication de la demande: 29.03.2006
(73) Titulaire: Société de Technologie Michelin, 63000 Clermont-Ferrand (FR); Michelin Recherche et Technique S.A., 1763 Granges-Paccot (CH)
(72) Inventeur: MERINO LOPEZ, José, F-63200 Riom (FR)
(74) Mandataire: Diernaz, Christian
(86) Numéro de dépôt international: PCT/EP2004/006334
(87) Numéro de publication internationale: WO 2004/110789

(56) Documents cités:
- EP-A- 0 753 419
- US-A- 3 467 160
- US-A- 4 480 671
- US-A- 4 739 812
- PATENT ABSTRACTS OF JAPAN vol. 2000, no. 09, 13 octobre 2000 (2000-10-13) & JP 2000 158913 A (BRIDGESTONE CORP), 13 juin 2000 (2000-06-13)

## Description

La présente invention a pour objet une amélioration de la bande de roulement des pneumatiques pour véhicules poids lourd ; elle concerne en particulier les bandes de roulement pourvues d'une sculpture formée d'éléments de sculpture essentiellement sous la forme de nervures ou d'une combinaison de blocs et de nervures.

Cette invention est notamment destinée à être mise en oeuvre pour des pneumatiques à carcasse radiale et destinés aux essieux non moteur des véhicules poids lourd.

De tels pneumatiques comportent en règle générale une armature de carcasse surmontée radialement à l'extérieur par une ceinture de sommet elle même surmontée d'une bande de roulement pourvue d'une sculpture formée essentiellement de nervures d'orientation générale circonférentielle. Par ailleurs, il est connu (US 4,480,671, correspondant au préambule de la revendication 1) de pourvoir chacune des zones latérales de cette bande de roulement avec une nervure latérale axialement à l'extérieur de la bande et dont le profil méridien est sensiblement parallèle et radialement intérieur au profil méridien du contour géométrique formant l'enveloppe géométrique de la zone médiane principale de la bande de roulement.

Par radialement intérieur, il faut entendre qu'à l'état neuf la nervure latérale comprend une face radialement à l'extérieur qui est en décalage par rapport à la surface de roulement du pneumatique. Au passage dans le contact sur la chaussée, sous l'action de la charge supportée, le matériau constitutif de la bande de roulement est comprimé, ce qui amène la nervure latérale en contact avec la chaussée. Le décalage initial doit être suffisant pour créer des pressions de contact sur cette nervure latérale tout en favorisant le glissement par rapport à la chaussée et ainsi développer une usure préférentiellement sur cette nervure, protégeant ainsi la nervure bord de la bande de roulement de l'usure irrégulière. Il a été constaté que le décalage se maintient tout au long de l'utilisation de la bande de roulement. Le décalage moyen employé est au moins égal à 1 mm et au plus égal à 6 mm ; cette valeur du décalage initial, c'est-à-dire lorsque le pneumatique est neuf, est bien sûr à adapter selon la nature du ou des matériaux constitutifs de la bande de roulement (mélanges de caoutchouc) et selon les caractéristiques mécaniques en compression de ces matériaux.

Grâce à cette disposition, il est possible de maintenir une arête vive (c'est-à-dire sans arrondissement) aux bords de la bande de roulement, la nervure formée axialement à l'extérieur de chacun desdits bords jouant le rôle d'une nervure dite "sacrifiée", c'est-à-dire dont l'usure va être accentuée afin de réduire l'usure de la nervure bord voisine. Cette nervure sacrifiée est séparée axialement de la nervure axialement la plus à l'extérieur de la bande par une rainure étroite d'orientation circonférentielle et de profondeur sensiblement égale à la profondeur des rainures principales de la bande de roulement délimitant les nervures de ladite bande.

Cette structure a montré toute son efficacité en usage ; toutefois, on a constaté avec les conditions d'utilisation actuelles que quand les bandes de roulement et plus précisément les bords axialement extérieurs de ces bandes sont soumis à des chocs pendant le roulage, il peut en résulter des cassures dans les mélanges de caoutchouc au fond des rainures circonférentielles étroites séparant les nervures bord des nervures sacrifiées. Pour réduire le risque de cassure, il est connu de limiter la profondeur de ces rainures, mais dans ce cas l'effet technique recherché avec la nervure sacrifiée n'est pas pérenne pendant toute la durée d'utilisation de la bande.

L'objet de l'invention est une bande de roulement dont les caractéristiques structurelles permettent de maintenir un effet de nervure sacrifiée empêchant le développement d'usure irrégulière sur les bords axialement à l'extérieur de la bande de roulement, cette bande de roulement étant elle-même pourvue d'une sculpture formée de plusieurs rainures principales d'orientation générale circonférentielle délimitant des éléments de relief (nervures, blocs). Par ailleurs, en utilisation, cette bande résiste aux agressions externes et permet également d'éviter la formation de cassures en fond d'incision.

Une bande de roulement selon l'invention comprend une surface de roulement ayant deux bords et limitée axialement par des faces latérales et une surface de roulement entre les deux faces latérales, cette surface de roulement étant destinée à venir en contact avec le sol ; cette bande comprend, sur sa surface de roulement, une sculpture formée d'éléments de relief (nervures, blocs) délimités par des rainures dont au moins une desdites rainures est orientée dans la direction longitudinale de la bande et a une profondeur H. Cette bande comprend, axialement à l'extérieur d'au moins un de ses bords, au moins un élément de relief, dit élément protecteur ou encore élément sacrifié, ayant une surface de contact qui est décalée radialement vers l'intérieur de la bande par rapport à la surface de contact du ou des élément(s) de relief qu'il protège de l'usure irrégulière ; cet élément protecteur et l'élément de relief qu'il protège ont deux faces latérales axialement en vis-à-vis et délimitant une incision ayant une profondeur V sensiblement égale à la profondeur H. Cette bande est **caractérisée en ce que** l'élément protecteur est relié à l'élément de sculpture protégé par une pluralité de ponts de liaison de gomme, ces ponts reliant les faces latérales en vis-à-vis de l'élément protégé et de l'élément protecteur.

La personne du métier choisira, en fonction des dimensions de la bande de roulement concernée et des matériaux la composant, le nombre de ponts de liaison et la surface affectée par ces ponts afin de conserver l'effet de nervure protectrice de l'élément du bord de la bande de roulement tout en réduisant la sensibilité aux chocs du fond de l'incision séparant ladite nervure protectrice dudit élément bord.

Par ailleurs, l'élément de relief protecteur peut être continu ou discontinu dans la direction longitudinale de la bande (c'est-à-dire dans la direction circonférentielle une fois ladite bande équipant un pneumatique). Il est bien sûr essentiel que cet élément protecteur continu ou cette succession d'éléments protecteur discontinus s'étend sur toute la circonférence du pneumatique afin de protéger toute la circonférence de l'élément bord du pneumatique.

La valeur du décalage radial de la surface extérieure de l'élément protecteur est choisi de façon à permettre un contact entre le sol et cette surface dans les conditions d'usage d'un pneumatique équipé avec la bande de roulement pourvue d'un élément. Préférentiellement ce décalage est non nul et supérieur à 1mm à l'état neuf. Comme cela est expliqué dans le brevet US 4480671 la différence de longueur de roulement entre les deux éléments (bord et décalé) conduit à la création d'efforts freineurs sur l'élément décalé et permet ainsi de concentrer l'usure sur cet élément en protégeant l'élément bord de l'usure irrégulière. Par effort freineur, on entend un effort exercé par le sol sur un élément de sculpture, ledit effort s'opposant au mouvement d'avancement du pneumatique.

Dans le cas où l'élément de relief d'au moins un bord d'une bande de roulement est une nervure, il est alors judicieux que l'élément protecteur soit également une nervure et que cette dernière soit reliée à la nervure bord par une pluralité de ponts de liaison. Ces ponts sont régulièrement répartis dans la direction longitudinale de la bande à des profondeurs différentes de manière à ne pas apparaître tous en même temps sur la surface de roulement après usure partielle.

Préférentiellement les ponts de liaison s'étendent dans la direction de la profondeur de l'incision sur au moins 40% de la profondeur V de l'incision considérée.

Dans le cas d'une bande de roulement comprenant une pluralité de blocs disposés circonférentiellement sur au moins un bord de la bande de roulement, il est possible de mettre soit une nervure continue soit une pluralité de blocs, ces derniers pouvant éventuellement être reliés entre eux par d'autres ponts de liaison. Dans tous les cas, le décalage initial entre les surfaces externes de contact de l'élément protecteur et de l'élément protégé est choisi de façon que ces deux surfaces viennent en contact avec le sol pendant le roulage dès que le pneumatique neuf pourvu d'une bande de roulement selon l'invention est mis en roulage voire seulement après un usage initial relativement court comparé à la durée totale d'usage de la bande avant retrait pour usure.

La surface de pontage, c'est-à-dire la somme des surfaces des intersections des ponts de liaison avec les surfaces latérales des éléments protecteurs, est déterminée de manière à conserver une souplesse suffisante pour permettre auxdits éléments protecteurs de toucher le sol en roulage.

L'emploi de ponts de liaison entre éléments protecteurs et éléments protégés du bord permet de mettre des incisions de grande largeur tout en bénéficiant quand même d'un appui desdits premiers éléments sur les seconds (usuellement la largeur de l'incision devait être limitée pour avoir en roulage et en virage un tel appui).

Pour réaliser une telle sculpture, on peut employer des techniques connues consistant à mouler dans la rainure étroite séparant l'élément protecteur du bord de la bande de roulement qu'il protège, avec un matériau sous forme de feuille ayant la caractéristique essentielle de résister aux efforts de moulage et de vulcanisation de la bande de roulement, cette feuille présentant une pluralité d'orifices pour laisser passer le mélange de caoutchouc pendant ledit moulage afin de former des ponts de liaison reliant l'élément sacrifié au bord de la bande de roulement.

Une autre méthode de réalisation consiste par exemple à mouler de façon usuelle les surfaces de contact en léger décalage et à mouler dans le même temps des puits ou cavités s'étendant dans la direction de l'épaisseur de la bande de roulement et régulièrement espacés dans la direction longitudinale. Les espaces entre ces puits sont remplis de mélange de caoutchouc pendant le moulage de la bande pour former des ponts de liaison s'étendant à partir de la surface externe de contact de l'élément protecteur.

Préférentiellement, chaque puits, de longueur moyenne D mesurée dans la direction longitudinale de la bande et de largeur moyenne d mesurée dans la direction axiale ou transversale de la bande, a une aire de section comprise entre 1 mm² et 10 mm².

Préférentiellement, la longueur D de chaque puits mesurée dans la direction longitudinale est comprise entre 2.5 mm et 15 mm. Il est en outre préférable que la largeur d soit plus petite que la longueur D.

Si on note L la distance entre chaque puits dans la direction circonférentielle, alors cette distance L est préférentiellement comprise entre une fois et six fois la dimension D afin d'avoir une rigidité de liaison entre l'élément protecteur et l'élément protégé suffisante. Encore plus préférentiellement, la distance L entre chaque puits est comprise entre deux et quatre fois la longueur moyenne D des puits.

Les puits peuvent avoir toute géométrie de section et notamment, circulaire, elliptique, rectangulaire, triangulaire, ou demi circulaire, demi elliptique, demi rectangulaire. Pour éviter le plus possible une concentration de contraintes en certains points en cours d'usage, il est judicieux d'employer une géométrie de section des puits dont le contour ne comprend pas de point anguleux (une forme circulaire est préférée à une forme rectangulaire notamment).

Dans le cas de puits ayant une section circulaire ou elliptique, la direction moyenne des puits (c'est-à-dire la direction de la génératrice des puits) peut être, vu dans un plan de coupe méridien - c'est-à-dire contenant l'axe de rotation du pneumatique - perpendiculaire à la surface externe de l'élément de relief décalé à l'état initial ou encore présenter une inclinaison par rapport à une telle perpendiculaire. Dans ce dernier cas, l'angle d'inclinaison est préférentiellement inférieur ou égal à 25°. Plus préférentiellement encore, l'angle est compris entre 0° et 15°.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue en coupe d'un bord d'une bande de roulement pour pneumatique selon l'invention, la coupe étant réalisée selon la ligne I-I repérée à la figure 2 ;

La figure 2 montre une vue partielle en élévation d'une bande de roulement selon l'invention ;

Les figures 3, 4, 5 montrent des variantes de dispositions selon l'invention ;

La figure 6 montre une variante comportant en outre des canaux débouchant sur la face latérale axialement externe de la nervure décalée ;

La figure 7 montre une autre variante comprenant deux incisions séparant un élément protecteur de l'élément protégé.

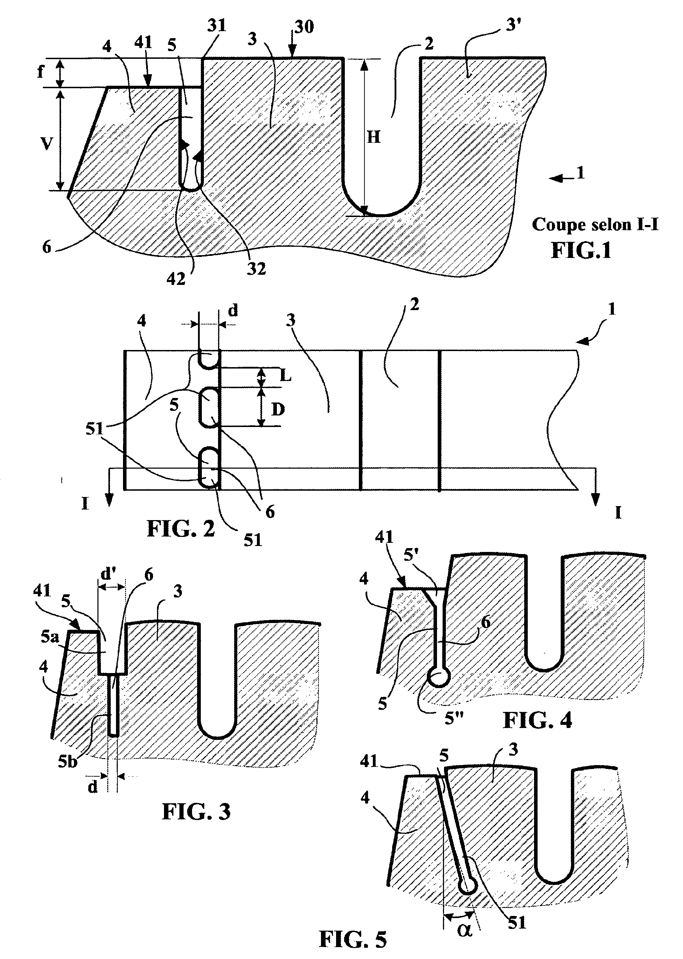

Sur la figure 1, on distingue une vue partielle d'une bande de roulement 1 selon l'invention. Cette vue partielle en coupe montre une nervure bord 3 de la bande de roulement 1 séparée d'une autre nervure 3' de la sculpture par une rainure 2 d'orientation longitudinale de profondeur H.

Afin de protéger la surface externe 30 de cette nervure bord 3 d'une usure irrégulière et plus particulièrement de l'arrondissement de son arête 31 axialement externe, on dispose axialement vers l'extérieur une nervure 4 dite protectrice. Cette nervure protectrice 4 a une surface de contact externe 41 destinée à venir en contact avec la chaussée en roulage ; la différence des rayons de roulement mesurés par rapport à l'axe de rotation de cette nervure protectrice 4 et de la nervure bord 3 conduit à amplifier les glissements sur la nervure protectrice 4 entraînant ainsi une usure prononcée sur cette nervure, réduisant d'autant l'usure irrégulière sur la nervure bord 3.

Cette nervure protectrice 4 est décalée d'une quantité f dans le sens de l'épaisseur de la bande et est séparée de la nervure bord 3 par une incision étroite 5 de profondeur V (mesurée par rapport à la surface externe 41 de la nervure protectrice 4) délimitée par des parois 42, 32 en vis-à-vis (respectivement de la nervure protectrice 4 et de la nervure bord 3) ; ces parois 42, 32 sont reliées par une pluralité de ponts de liaison 6 en mélange de caoutchouc comme cela est visible sur la figure 2 montrant en élévation la même partie de la même bande de roulement.

Par incision étroite, on entend ici une incision dont la largeur est inférieure à 3 mm.

Sur la figure 2, on voit l'incision étroite 5 de largeur d séparant la nervure protectrice 4 de la nervure bord 3, cette incision étroite 5 comportant une pluralité de ponts 6 de liaison en gomme s'étendant de la surface de contact 41 de la nervure protectrice 4 jusqu'au fond de l'incision 5. Tout se passe comme si, l'incision 5 était formée d'une succession de puits 51 de dimensions d et D (cette dernière dimension étant mesurée dans la direction longitudinale de la bande). Ces puits 51 s'étendent ici de la surface de contact 41 de la nervure protectrice 4 jusqu'au fond de l'incision.

La profondeur V de chaque incision ou puits peut être égale ou différente de la profondeur H des rainures principales 2.

Avantageusement, le décalage f de la surface radialement externe 41 de la nervure protectrice 4 est non nul et tel que sous une charge égale à la charge nominale du pneumatique pourvu d'une telle bande de roulement, ladite surface externe 41 est en contact avec la chaussée sur laquelle roule le pneumatique. Après contact avec la route, le décalage de cette nervure protectrice 4 est conservé par auto usure pendant toute la durée d'utilisation, les ponts de liaison 6 entre la nervure protectrice 4 et nervure bord 3 assurant une liaison mécanique suffisante pour éviter des cassures dans le fond de l'incision 5.

Pour fabriquer une telle bande de roulement, on peut mouler la pluralité de puits avec des éléments moulants de forme et de dimensions appropriés, ces éléments moulants étant placés en relief sur la surface de moulage d'un moule de bande de roulement.

Dans un autre mode de réalisation, on peut disposer avant le moulage et la vulcanisation de la bande de roulement un intercalaire entre la nervure bord et la nervure sacrifiée, ledit intercalaire étant percé d'un nombre approprié d'orifices pour laisser passer le mélange de caoutchouc pendant l'opération de moulage de la bande et former ainsi le nombre voulu de ponts de liaison ainsi que leur répartition. L'intercalaire est choisi dans un matériau permettant le moulage et pouvant soit être enlevé en totalité ou en partie après le moulage soit être éliminé progressivement en roulage.

Dans un exemple de réalisation d'une bande de roulement pour un pneumatique de dimension 295/80 R 22.5, les dimensions choisies sont :
d = 2 mm
D = 3 mm
L = 7 mm (L étant la longueur des ponts de liaison mesurée dans la direction circonférentielle).

Par souci de simplification et de clarté, dans les figures suivantes, les éléments de même nature sont désignés par les mêmes références.

Sur la figure 3, un autre mode de réalisation d'une bande de roulement selon l'invention a été représenté. Dans ce cas, la rainure 5 séparant l'élément protecteur 4 d'une nervure bord 3 comprend une première partie 5a, formant une rainure longitudinale de profondeur h , prolongée par une seconde partie 5b ; la première partie 5a débouchant sur la surface de contact 41 de l'élément sacrifié 4 ne comprend aucun pont de liaison, et la seconde partie 5b est semblable à ce qui a été décrit pour la variante décrite avec le support des figures 1 et 2 et comprend une pluralité de ponts de liaison 6. La première partie 5a de la rainure 5 de découplage a une largeur d' supérieure à la largeur d de la seconde partie de la rainure de découplage.

De cette façon, il est possible de conserver une plus grande mobilité transversale de la nervure bord lorsque la bande de roulement est neuve et protéger le fond de la rainure de découplage.

Sur la figure 4, chaque puits 6 se termine près de la surface externe 41 de l'élément protecteur 4 et au fond de l'incision 5 par des parties de section sensiblement plus grande 5' et 5" respectivement, pour réduire les concentrations d'efforts dans ces parties. Préférentiellement, les surfaces de section des parties de plus grandes sections 5' et 5" sont au plus égales à 2.5 fois la surface de l'incision 5

La variante de la figure 5 montre un élément protecteur 4 séparé d'un élément bord 3 par une incision 5 formée en fait d'une succession de puits 51 situés dans des plans radiaux, c'est-à-dire passant par l'axe de rotation du pneumatique, et inclinés selon un angle moyen α avec une perpendiculaire à la surface de contact 41 de l'élément sacrifié 4. Préférentiellement, cet angle moyen α est au plus égal à 15°.

Cette dernière disposition permet de mieux maîtriser les efforts dans l'aire de contact.

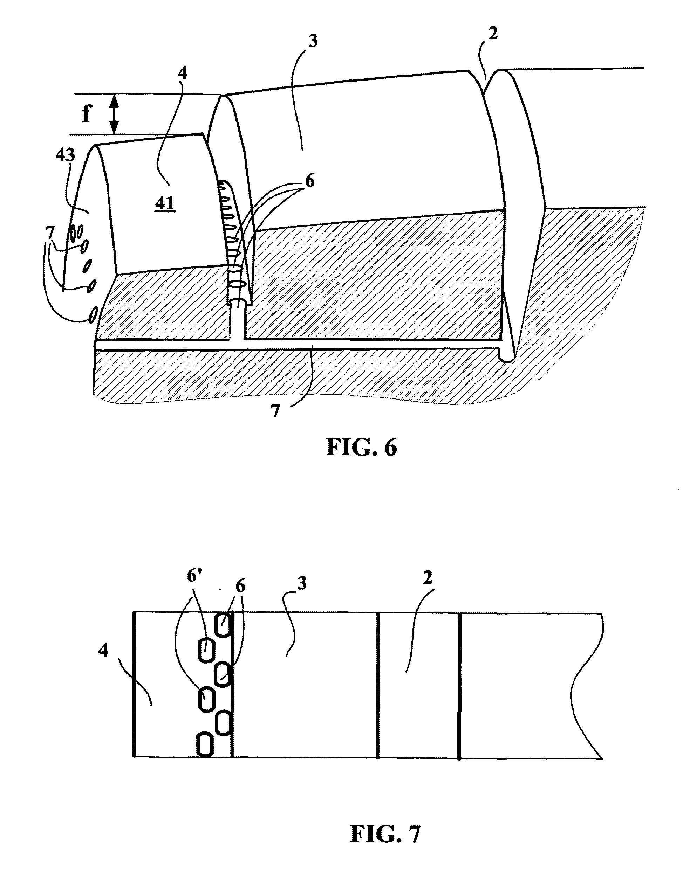

La variante de la figure 6 montre une combinaison de la variante décrite avec le support de la figure 3 et la présence de canaux 7 débouchant sur la face latérale 43 axialement à l'extérieur de la nervure protectrice 4. Cette combinaison offre l'intérêt de permettre une réduction très sensible des températures de fonctionnement dans la nervure protectrice 4 et le bord de la bande de roulement. Dans cette variante, chaque canal 7 a une section sensiblement circulaire et est raccordé à au moins un puits 6 ; par ailleurs, chaque canal 7 est prolongé jusque dans la rainure circonférentielle 2 axialement à l'intérieur de la nervure bord 3. Le décalage f de la surface de contact 41 de l'élément protecteur 4 est préférentiellement choisi pour que cette surface soit en contact avec le sol à l'état neuf ou à la rigueur après une usure initiale.

Avantageusement, la section moyenne des canaux est circulaire avec un diamètre compris entre 1.5 mm et 3 mm.

Pour fabriquer une telle bande de roulement on peut employer l'une ou l'autre des méthodes déjà évoquées plus haut en combinaison avec le moulage des canaux par des doigts transversaux à la bande de roulement, comme par exemple décrit dans le brevet WO98/54009.

L'invention n'est pas limitée aux exemples décrits et représentés et diverses modifications peuvent y être apportées sans sortir de son cadre.

En particulier, les nervures longitudinales (c'est-à-dire circonférentielles sur le pneumatique) dans les exemples décrits sont rectilignes mais elles peuvent avoir une forme en zigzag. Par ailleurs, on obtient les mêmes avantages dès lors que les éléments de sculpture des bords de la bande de roulement sont des blocs éventuellement reliés entre eux dans la direction circonférentielle par des ponts de liaison. La partie protectrice peut également être formée avec une pluralité de blocs séparés des éléments voisins de la bande de roulement qu'ils protègent par des incisions pourvues ou non de ponts de liaison.

Dans une autre forme de réalisation (montrée à la figure 7), la nervure de protection 4 est découplée de la nervure bord 3 par deux alignements de puits 6, 6' axialement proches l'un de l'autre et de la nervure bord et tels que les puits 6' d'une série soient décalés circonférentiellement des puits 6 de l'autre série. Cette forme de réalisation augmente la souplesse à l'écrasement pour permettre le contact glissant de l'élément protecteur 4 avec la chaussée. Dans ce type de variante, on peut envisager que les puits 6 et 6' ont sensiblement la même profondeur ou bien des profondeurs différentes.

L'incision ou les puits des variantes décrites peuvent avoir une largeur d non constante et aller en augmentant vers le fond de ladite incision.

## Revendications

1. Bande de roulement (1) comprenant une surface de roulement ayant deux bords et limitée axialement par des faces latérales et une surface de roulement entre les deux faces latérales, cette surface de roulement étant destinée à venir en contact avec le sol ; cette bande comprenant, sur sa surface de roulement, une sculpture formée d'éléments de relief (3, 31) délimités par des rainures (2) dont au moins une est orientée dans la direction longitudinale de la bande et a une profondeur H ; cette bande comprenant, axialement à l'extérieur d'au moins un de ses bords, au moins un élément de relief (4), dit élément protecteur, ayant une surface de contact (41) qui est décalée radialement vers l'intérieur de la bande par rapport à la surface de contact (30) du ou des élément(s) de relief (3) qu'il protège de l'usure irrégulière, le décalage étant tel que sous une charge égale à la charge nominale la surface de contact (41) est en contact avec la chaussée ; cet élément protecteur (4) et l'élément de relief (3) protégé ayant deux faces latérales (42, 32) axialement en vis-à-vis et délimitant une incision (5) ayant une profondeur sensiblement égale à la profondeur H, cette bande étant **caractérisée en ce que** l'élément protecteur (4) est relié à l'élément protégé (3) par une pluralité de ponts de liaison (6) de gomme reliant les faces latérales (42, 32) en vis-à-vis desdits éléments, ces ponts de liaison étant régulièrement répartis dans la direction longitudinale de la bande.

2. Bande de roulement selon la revendication 1 **caractérisée en ce que** les ponts de liaison (6) en gomme s'étendent dans la direction de la profondeur sur au moins 40% de la profondeur de l'incision (5) entre l'élément protecteur (4) et l'élément protégé (3).

3. Bande de roulement selon l'une des revendications 1 ou 2 **caractérisée en ce que** les ponts de liaison (6) s'étendent de la surface de contact de l'élément protecteur (4) jusqu'au fond de l'incision (5) séparant l'élément protecteur (4) de l'élément protégé (3), les espaces entre lesdits ponts formant des puits (51) de longueur moyenne D et de largeur moyenne d, la longueur D étant mesurée dans la direction longitudinale de la bande et la largeur d étant mesurée dans la direction axiale ou transversale, chaque puits ayant une aire de section comprise entre 1 mm² et 10 mm².

4. Bande de roulement selon la revendication 3 **caractérisée en ce que** la distance L séparant deux puits (51) successifs dans la direction circonférentielle est comprise entre une fois et six fois la longueur D et **en ce que** la largeur d des puits mesurée dans la direction axiale est inférieure à la longueur D.

5. Bande de roulement selon l'une des revendications 3 ou 4 **caractérisée en ce que** la direction moyenne des puits (51) dans l'épaisseur de la bande fait, vu dans un plan de coupe méridien - c'est-à-dire un plan contenant l'axe de rotation du pneumatique, un angle d'inclinaison moyen par rapport à une perpendiculaire à la surface de contact de l'élément protecteur qui est inférieur ou égal à 25°.

6. Bande de roulement selon l'une des revendications 3 à 5 **caractérisée en ce que** chaque puits (51) comprend une partie élargie(5', 5") à au moins une des extrémités radialement intérieure ou extérieure.

7. Bande de roulement selon l'une des revendications 3 à 6 **caractérisée en ce que** les puits (51) prennent naissance au fond d'une première partie formant une rainure longitudinale (5a) débouchant sur la surface de contact (41) de l'élément sacrifié (4) et dépourvue de pont de liaison.

8. Bande de roulement selon l'une des revendications 1 à 7 **caractérisée en ce qu'**en outre une pluralité de canaux transversaux 7 sont prévus à l'intérieur d'au moins un élément protecteur (4) et débouchant sur une face latérale externe dudit élément.

9. Bande de roulement selon la revendication 8 **caractérisée en ce que** les canaux (7) sont connectés aux puits (51) présents dans l'élément protecteur (4).

## Claims

1. A tread (1) comprising a running surface having two edges and limited axially by lateral faces and a running surface between the two lateral faces, this running surface being intended to come into contact with the ground; this tread comprising, on its running surface, a tread pattern formed of elements in relief (3, 31) defined by grooves (2), at least one of said grooves being oriented in the longitudinal direction of the tread and having a depth H; this tread comprising, axially to the outside of at least one of its edges, at least one element in relief (4), referred to as a "protective element", having a contact surface (41) which is offset radially towards the inside of the tread relative to the contact surface (30) of the element(s) in relief (3) which it protects from irregular wear, the offset being such that - under a load equal to the nominal load - the contact face (41) is in contact with the road, this protective element (4) and the protected element in relief (3) having two facing axially outer lateral faces (42, 32) and defining an incision (5) having a depth substantially equal to the depth H, this tread being **characterised in that** the protective element (4) is connected to the protected element (3) by a plurality of rubber connecting bridge (6) connecting the facing lateral faces (42, 32) of said elements, these rubber connecting bridges being regularly distributed in the longitudinal direction of the tread.

2. A tread according to Claim 1, **characterised in that** the rubber connecting bridges (6) extend in the direction of the depth over at least 40% of the depth of the incision (5) between the protective element (4) and the protected element (3).

3. A tread according to one of Claims 1 to 2, **characterised in that** the connecting bridges (6) extend from the contact surface of the protective element (4) to the bottom of the incision (5) separating the protective element (4) from the protected element (3), the spaces between said bridges forming wells (51) of average length D and of average width d, the length D being measured in the longitudinal direction of the tread and the width d being measured in the axial or transverse direction, each well having a sectional area of between 1 mm² and 10 mm².

4. A tread according to Claim 3, **characterised in that** the distance L between two following wells (51) in the circumferential direction is between one and six times the length D and **in that** the width d of the wells measured in the axial direction is less than the length D.

5. A tread according to one of Claims 3 or 4, **characterised in that** the average direction of the wells (51) in the thickness of the tread, viewed in a meridian section plane - that is to say a plane containing the axis of rotation of the tyre, forms an angle of average inclination relative to a line perpendicular to the contact surface of the protective element which is less than or equal to 25°.

6. A tread according to one of Claims 3 to 5, **characterised in that** each well (51) comprises a widened part (5', 5 ") at at least one of the radially inner or outer ends.

7. A tread according to one of Claims 3 to 6, **characterised in that** the wells (51) originate at the bottom of a first part forming a longitudinal groove (5a) opening on to the contact surface (41) of the sacrificed element (4) and devoid of connecting bridge.

8. A tread according to one of Claims 1 to 7, **characterised in that** in addition a plurality of transverse channels 7 are provided within at least one protective element (4) and opening on to an outer lateral face of said element.

9. A tread according to Claim 8, **characterised in that** the channels (7) are connected to the wells (51) present in the protective element (4).

## Patentansprüche

1. Laufstreifen (a), umfassend eine Lauffläche, die zwei Ränder aufweist, und axial begrenzt, durch Seitenflächen, und eine Lauffläche zwischen den beiden Seitenflächen, wobei diese Lauffläche mit dem Boden in Kontakt kommen soll; wobei dieser Streifen auf seiner Lauffläche ein Profilmuster aufweist, das durch Profilelemente (3, 31) gebildet wird, die durch Nuten (2) begrenzt werden, von denen mindestens eine in Längsrichtung des Streifens ausgerichtet ist und eine Tiefe H aufweist; wobei dieser Streifen axial nach außen mindestens einer seiner Ränder mindestens ein Profilelement (4), ein so genanntes Schutzelement, aufweist, das eine Kontaktfläche (41) aufweist, die radial nach innen des Streifens bezüglich der Kontaktfläche (30) des oder der Profilelemente (3), die es vor unregelmäßigem Verschleiß schützt, versetzt ist, wobei der Versatz derart ist, dass die Kontaktfläche (41) unter einer Last, die gleich der Nennlast ist, mit der Straße in Kontakt steht; wobei dieses Schutzelement (4) und das geschützte Profilelement (3) zwei Seitenflächen (42, 32) aufweisen, die sich axial gegenüberliegen und einen Einschnitt (5) begrenzen, der eine Tiefe aufweist, die im Wesentlichen gleich der Tiefe H ist, wobei dieser Streifen **dadurch gekennzeichnet ist, dass** das Schutzelement (4) durch mehrere Verbindungsbrücken (6) aus Gummi, die die Seitenflächen (42, 32) gegenüber den Elementen verbinden, mit dem geschützten Element (3) verbunden ist, wobei die Verbindungsbrücken gleichmäßig in der Längsrichtung des Streifens verteilt sind.

2. Laufstreifen nach Anspruch 1, **dadurch gekennzeichnet, dass** sich die Verbindungsbrücken (6) aus Gummi über mindestens 40% der Tiefe des Einschnitts (5) zwischen dem Schutzelement (4) und dem geschützten Element (3) in der Richtung der Tiefe erstrecken.

3. Laufstreifen nach Anspruch 1 oder 2, **dadurch gekennzeichnet, dass** sich die Verbindungsbrücken (6) von der Kontaktfläche des Schutzelements (4) bis zum Grund des das Schutzelement (4) von dem geschützten Element (3) trennenden Einschnitts (5) erstrecken, wobei die Räume zwischen den Brücken Schächte (51) mit einer Durchschnittslänge D und einer Durchschnittsbreite d bilden, wobei die Länge D in Längsrichtung des Streifens gemessen wird und die Breite d in Axial- oder Querrichtung gemessen wird, wobei jeder Schacht eine Querschnittsfläche zwischen 1 mm² und 10 mm² aufweist.

4. Laufstreifen nach Anspruch 3, **dadurch gekennzeichnet, dass** der die in Umfangsrichtung aufeinander folgenden beiden Schächte (51) trennende Abstand L ein bis sechs mal die Länge D aufweist und dass die in Axialrichtung gemessene Breite d der Schächte kleiner als die Länge D ist.

5. Laufstreifen nach Anspruch 3 oder 4, **dadurch gekennzeichnet, dass** die Durchschnittsrichtung der Schächte (51) in der Dicke des Streifens, in einer Meridianebene - das heißt einer Ebene, die die Drehachse des Luftreifens enthält - gesehen, einen Durchschnittsneigungswinkel bezüglich einer Senkrechten der Kontaktfläche des Schutzelements bildet, der kleiner gleich 25° ist.

6. Laufstreifen nach einem der Ansprüche 3 bis 5, **dadurch gekennzeichnet, dass** jeder Schacht (51) an mindestens einem der radial inneren oder äußeren Enden einen verbreiterten Teil (5', 5'') aufweist.

7. Laufstreifen nach einem der Ansprüche 3 bis 6, **dadurch gekennzeichnet, dass** die Schächte (51) vom Boden eines ersten Teils unter Bildung einer Längsnut (5a), die in der Kontaktfläche (41) des Opferelements (4) mündet und keine Verbindungsbrücke aufweist, ausgehen.

8. Laufstreifen nach einem der Ansprüche 1 bis 7, **dadurch gekennzeichnet, dass** des Weiteren mehrere Querkanäle (7) im Inneren mindestens eines Schutzelements (4) vorgesehen sind, die in einer äußeren Seitenfläche des Elements münden.

9. Laufstreifen nach Anspruch 8, **dadurch gekennzeichnet, dass** die Kanäle (7) mit in dem Schutzelement (4) vorhandenen Kanälen (51) verbunden sind.
